# EUROPEAN PATENT APPLICATION

(11) **EP 1 978 702 A1**
(43) Date of publication of application: **08.10.2008**
(21) Application number: 07251086.0
(22) Date of filing: 15.03.2007
(51) Int. Cl.: H04L 29/06

(54) **Virtual storage**

(71) Applicant: British Telecommunications Public Limited Company, London EC1A 7AJ (GB)
(72) Inventor: The designation of the inventor has not yet been filed
(74) Representative: Lau, Chi-Fai

(57) **Abstract**

A method of providing data access to a storage means in a telecommunications network from a mobile device, said mobile device comprising a memory card, wherein said method comprises: establishing by the mobile device a. data communications link between the mobile device and the telecommunications network; generating by the memory card a session key, and independently providing a matching session key to the data store; accessing by the memory card the storage means using the established data communications link through the mobile device, wherein access is secured by using the session key generated by the memory card.

## Description

### Field of the Invention

The present invention relates to a method for providing access to storage means, in particular a method and system of access to secure remote storage means from a local device using a secure memory card.

### Background to the Invention

The popularity of mobile devices such as mobile phones and PDAs has grown significantly over the last decade. These devices have tended to include internal memory as well as external memory capabilities, usually in the form of removable memory cards, such as Secure Digital (SD), CompactFlash (CF) and Multi-Media Card (MMC).

More recently there have been developments in the field of smart memory cards, which incorporate features in addition to standard memory capabilities. One such development is smart memory cards that include a smart card controller providing security functionality. These smart memory cards are often referred to as secure memory or media cards, SMCs. However, current SMC solutions have yet to fully exploit the integration of the large memory typically available with the security functionality offered by the smart card controller. Indeed, most applications designed for SMCs have treated them as two separate functional entities hosted on the same card.

Other "smart" memory cards exist, which offer storage capabilities off-line or external to the card. For example, US 2003/0101325 describes a storage solution based on, for example, a PCMCIA card or similar, for use with a device such as a digital camera or PDA. The card includes a network interface module, which provides a network connection to the camera. The card may be used in a digital camera to provide data storage to the camera via the network interface module, which provides a direct infrared or radio frequency connection to a laptop or similar. Consequently, the digital camera can effectively use the card to store images on the storage means provided by the laptop via the network interface. A controller on the card is used to handle allocation of memory on the remote laptop for use by the digital camera. However, the card only offers basic management of external storage without any security functionality.

### Summary of the Invention

It is the aim of embodiments of the present invention to provide an improved memory card offering secure external or "virtual" storage.

According to one aspect of the present invention, there is provided a method of providing data access to a storage means in a telecommunications network from a mobile device, said mobile device comprising' a memory card, wherein said method comprises:
establishing by the mobile device a data communications link between the mobile device and the telecommunications network;
generating by the memory card a session key, and independently providing a matching session key to the data store;
accessing by the memory card the storage means using the established data communications link through the mobile device, wherein access is secured by using the session key generated by the memory card.

Preferably, the access is secured by using the session key to encrypt and decrypt data transferred between the data store and the memory card. The session key may be generated by the memory card based on a shared secret key held securely in both the memory card and at an authentication server.

The session key provided to the data store is preferably generated by the authentication server.

Access to the storage means can be blocked by changing the session key used by the storage means. The authentication server may provide a new session key to the storage means to block access to the storage means from the memory card.

Preferably, the memory card comprises a processing means, and said generating and accessing steps are initiated by the processing means. Furthermore, the memory card may be removable from the mobile device, and be based on a modified flash memory card.

Preferably, the accessing step comprises storing data input to the mobile device at the memory store. This forms the basis for the remote or virtual storage feature, where data is automatically stored at a more secure remote server rather than on the less secure mobile device itself.

The memory card may comprise local storage means and the input data may also be stored in the local storage means. Thus, the accessing step may comprise periodically storing a duplicate of the input data at the memory store in the telecommunications network.

According to a second aspect of the present invention, there is provided a storage means in a telecommunications network and a mobile device, said mobile device comprising a memory card, wherein:
the mobile device is adapted to establish a data communications link between the mobile device and the telecommunications network;
the memory card is adapted to generate a session key, and the data store is independently provided with a matching session key, and the memory card is further adapted to access the storage means using the established data communications link through the mobile device, wherein access is secured by using the session key generated by the memory card.

According to a further aspect of the present invention, there is provided a memory card for use in a mobile device, said memory card comprising:
a processor adapted to establish a data communications link between the mobile device and a storage means connected to a telecommunications network;
the memory card is adapted to generate a session key and further adapted to access the storage means through a data communications link established by the mobile device, wherein access is secured by using the session key generated by the memory card.

Embodiments of the present invention result in many advantages. For example, only one card is required for authentication with a remote data store and local storage on the card itself. The user does not need to input any password and no other interaction is required by the user as the process is fully automated.

The memory card is based on a standard flash memory card and is very portable and can be transferred easily between devices.

As data can be transferred freely between the local storage on the card and the remote data store, duplicates or back-ups of data can be readily provided. This is useful when no network connection is available, so some of the data might be available locally still. Furthermore, remote storage has advantages such as being cheap to manage centrally and being cheap and easy to back-up regularly.

In short, the memory card solution in embodiments of the present invention provides simple, secure and reliable data storage with trusted access over secured wireless and cellular connections.

### Brief Description of the Drawings

For a better understanding of the present invention reference will now be made by way of example only to the accompanying drawings, in which:
Figure 1 is a schematic diagram illustrating the architecture of a secure media card in an embodiment of the present invention;
Figure 2 is a network diagram illustrating an arrangement in an embodiment of the present invention;
Figure 3 is a message flow diagram illustrating the steps for registering the secure media card with a remote data store in an embodiment of the present invention;
Figure 4 is a message flow diagram illustrating the steps for accessing the data store from the secure media card in an embodiment of the present invention.

### Description of the Preferred Embodiments

The present invention is described herein with reference to particular examples. The invention is not, however, limited to such examples.

The present invention relates to a method of providing secure data access from a mobile communications device, such as a PDA or mobile phone, through a memory card connected to the device to a remote data store. Access to data in the remote data store is controlled by the memory card in the device. Data requests made by a user to the device are routed by a controller in the memory card to either a memory module on the memory card itself, or to the remote data store. Access to the remote data store is secured by utilising an authentication and encryption process handled by a security controller on the memory card. As such, the data access is referred to as "secure virtual storage", as the remote data store is both secure and appears to the user as residing in the memory card itself because the remote access is made automatically and invisibly to the user.

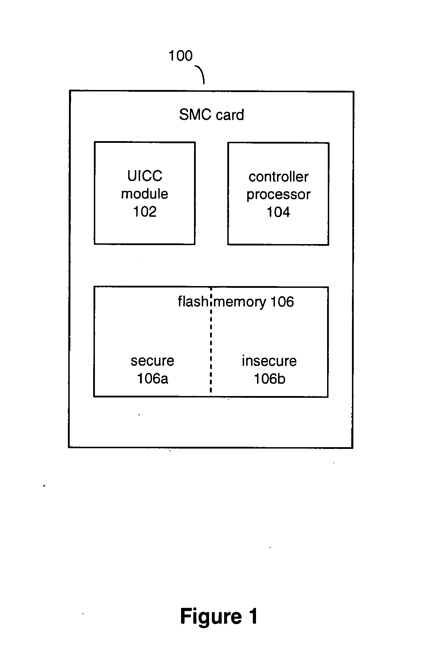

Figure 1 illustrates the architecture of a secure media card (SMC) 100 in an embodiment of the present invention. The SMC 100 is a multi-chip module having a similar physical format to a standard memory card such as a MMC (multi media card) or SD (secure digital) card. The SMC 100 is designed to be used with communications devices such as mobile phones and PDAs.

The SMC 100 comprises several individual modules including a universal integrated circuit card (UICC) module 102. The UICC module 102 holds various applications, one of which is a security application which includes a unique identity number as well as a secret key, K. As will be discussed below, a further copy of the secret key K is also stored securely in a remote authentication server. The UICC module 102 is implemented in tamper-resistant silicon technology, and thus the applications, identities and key resident on the UICC module 102 are secure and tamper proof.

The SMC 100 also includes a controller processor 104 and the non volatile flash memory 106. The controller processor 104 is used to control access to the various applications and functions provided by the SMC 100 to any device the SMC 100 is inserted into. These include the UICC module 102 as well as the flash memory 106. The flash memory 106 is itself split into a secure component 106a and an insecure component 106b. The secure memory component 106a is controlled by the UICC module 102, and access to the secure memory 106a can only be obtained through the controller processor 104 and the UICC module 102. The insecure memory component 106b can be accessed directly through the controller processor 104.

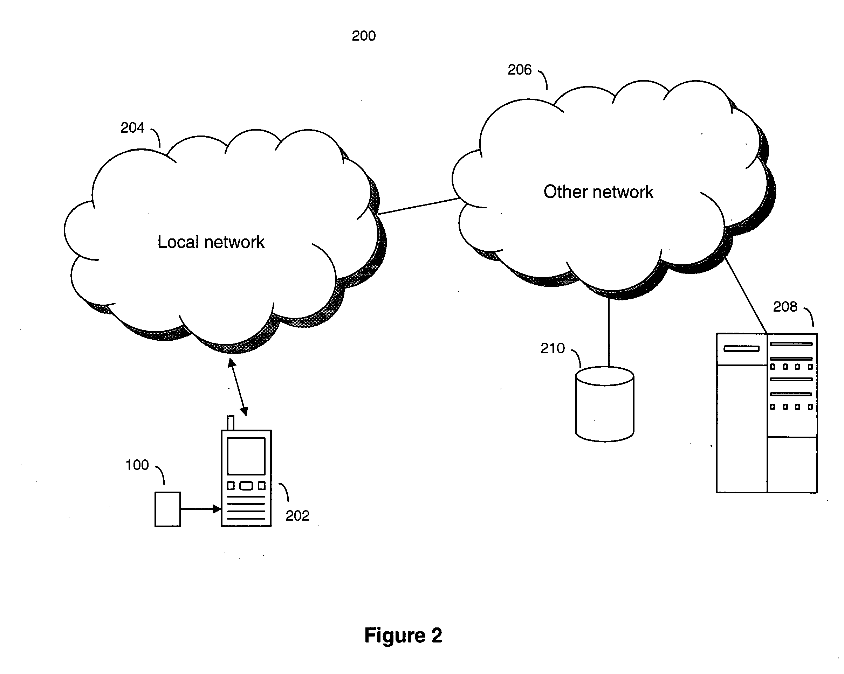

Figure 2 shows a system 200 in which the SMC 100 can be used. The system 200 includes the SMC 100, which is attached to a mobile phone 202. The mobile phone connects with a local cellular mobile network 204, which in this example is a GSM network. The mobile network 204 is connected to further networks, including network 206, which can be for example the internet. Attached to the other network are an authentication server 208 and a data store 210. The mobile device 202 can thus use the mobile network 204 to connect with the internet or other network 206, which may provide the mobile with access to additional servers and services, such as access to websites and other file servers (not shown), as well as the authentication server 208 and data store 210 shown here. The authentication server 208 also stores a copy of the unique identity and secret key K associated with and stored in the UICC 102.

Whilst the authentication server 208 and data store 210 have been shown as separate entities, in practice, they are likely to be located within the same physical entity or at the least be connected to each other. The operation of these entities will be explained further below.

Whilst the embodiment of the invention described here is with reference to a GSM enabled mobile device 202, it should be noted that the invention can also operate with other network enabled devices and local network connections such as a 3G (UMTS) or WiFi (IEEE 802.11). The point to note is that the mobile device 202 can use the local network 204, which may be UMTS or WiFi network, to get access to the authentication server and data store, preferably via a further network 206 such as the Internet.

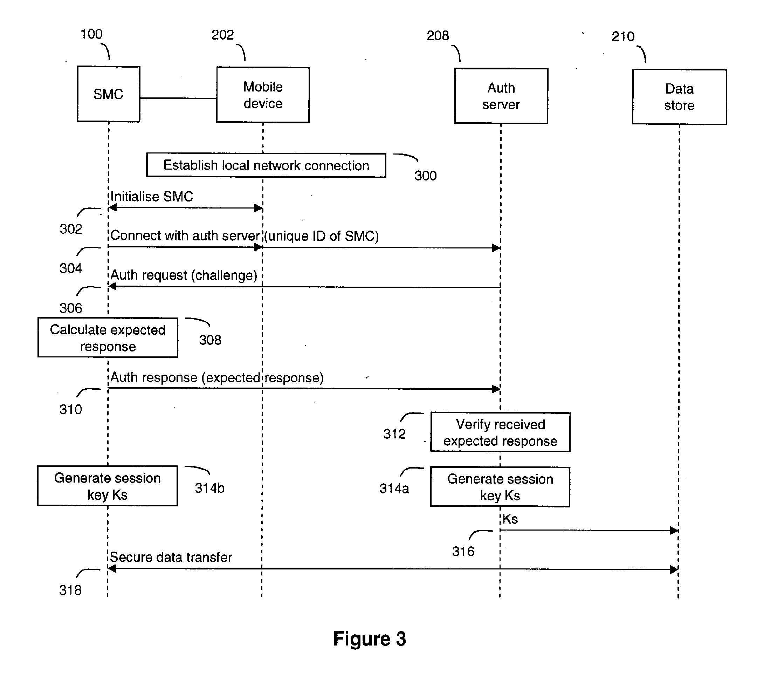

The operation of the SMC 100 will now be described in more detail with reference to the message flow diagram of Figure 3, where like elements are referenced with like numerals. In particular, the registration of the SMC 100 with the authentication server 208 in order to establish a secure communications channel is described.

In step 300, the mobile device 202 has already established a connection with the local mobile network 204. The process of doing this is well known in the art, so will not be discussed here. In step 302, the SMC 100 is inserted into the mobile device 202. The mobile device 202 detects the SMC 100 and downloads drivers for the operation of the SMC 100 from the flash memory 106 if this has not already been done i.e. it is the first time the SMC 100 has been used with the mobile device 202. This step effectively initialises the mobile device 200 for use with the SMC 100.

In step 304, the controller processor 104 on the SMC 100 calls the driver on mobile device 200 to establish communications between the SMC 100 and the authentication server 208. This may be done by controller processor 104 instructing the mobile device 200 to connect to a specific URL associated with the authentication server 208. The request to connect also includes the unique identifier associated with the SMC 100. This identifier allows the authentication server 208 to determine SMC 100 making the request.

In step 306, the authentication server 208 identifies the SMC 100 by the unique ID received. The authentication server then sends a challenge to authenticate the SMC 100 using the communication channel now established between the mobile device 202 and the authentication server 208. The authentication request is based on the fact that the authentication server 208 and the SMC 100, and specifically the UICC module 102, both share a secret key K. Note, the secret key K is associated with the SMC 100 and the unique identifier. Thus, the authentication server 208 can verify the identity of the SMC 100 by sending a challenge, such as a random number, to the SMC 100, to which the SMC 100 must respond with an expected value that is based the application of some predetermined algorithm applied to the received random number and the secret key K stored in the SMC 100.

The calculation of the expected value is done by the UICC 102, as the UICC module 102 holds the secret key, and as described above, the UICC is designed to be secure so retains the secret key within the tamper proof UICC module 102. Step 308 shows the calculation of the expected response by the UICC module 102 in the SMC 100.

In step 310, the UICC module 102 sends the expected response to the authentication server 208 in an authentication response message. In step 312, the authentication server 208 verifies the expected response by applying the same predetermined algorithm to the challenge issued and its stored version of the secret key K, and checking the received expected response to that calculated itself. Thus, steps 304 to 312 illustrate the authentication of the SMC 100 with the authentication server 208.

If the received expected response is correct, then the authentication server 208 generates a session key Ks in step 314a, which is based on the secret key K held by the authentication server 208 using a suitable key generating algorithm. At the same time, in step 314b, the UICC 102 also generates the same session key Ks by using the same key generating algorithm on the secret key stored at the UICC module 102.

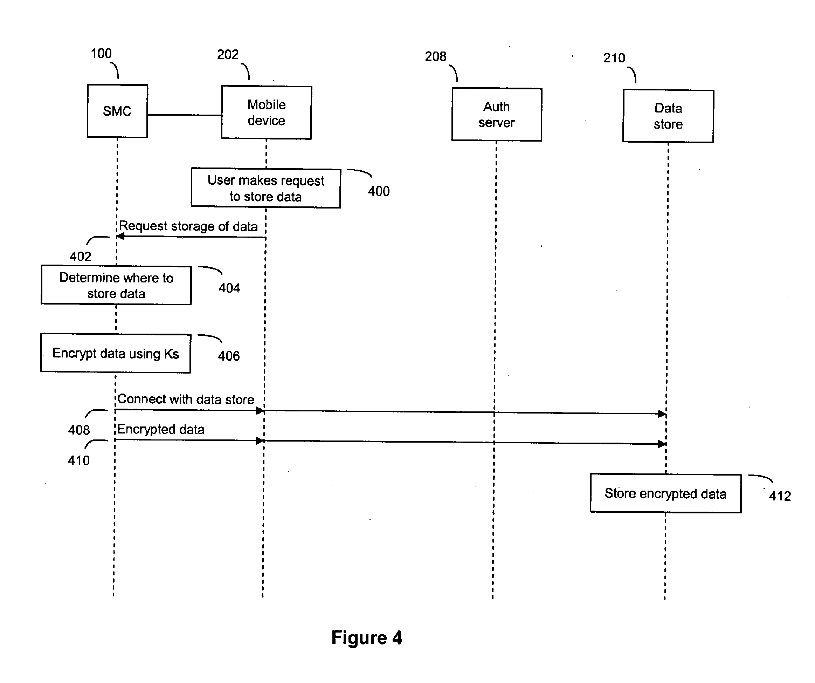

In step 316, the authentication server 208 sends the session key Ks to the data store 210. As a result, the SMC 100 and the data store 210 can communicate and transfer data securely to each other by using the session key for encryption. This is shown in step 318 and the specific steps of accessing the data store by the SMC 100 is described in more detail below with reference to Figure 4.

Figure 4 illustrates the operation of the SMC 100 in response to data access and storage requests from a user of the mobile device 200.

In step 400, the user of the mobile device 200 makes a request to store data. This may relate to any kind data, for example, the user may have downloaded some music or video and now wishes to save that data. The mobile device 200 processes the request and passes the data storage request onto the SMC 100, and in particular the controller processor 104 of the SMC 100. This is shown in step 402.

Depending on the type of data that needs to be stored, for example sensitive data requiring secure storage or just non-sensitive data requiring any type of storage, the controller processor can decide whether to store the data locally on the SMC 100 in the flash memory 106, or can utilise the remote data store 210. Indeed, storage locally in the flash memory 106 can either be in the secure part 106a, which must be accessed via the UICC module 102, or in the insecure part 106b, which can be accessed directly by the controller processor 104. Data access to and from the data store 210 can be secured by encrypting the data using the previously generated session key Ks.

The decision as to where precisely to store the data is made by the controller processor 104 in step 404, and is based on the type of data, as described above, and also on profiles or policies that can be set up to determine default settings for where and how different types of data should be stored. These policies are set up in such a way as to remain transparent to the user, in the sense that once the policies are set, the user does not and will not know exactly how the data that has been requested for storage is actually stored.

In this example, the data to be stored is considered to be sensitive or important data by the controller processor 104, and so the controller processor decides based on some predetermined policy, that the data should be stored remotely in data store 210. Thus, the data is passed to the UICC module 102, which encrypts the data using the previously generated session key Ks (see step 314b in Figure 3) in step 406. The UICC module 102 can then request the mobile device open up a communications channel between the mobile device 200 and the data store 210 in step 408. This communications channel between the mobile device 200 and the data store 210 is then used by the SMC 100 to send the data, now encrypted using the session key Ks, to the data store 210 in step 410. In step 412, the data store stores the encrypted data securely.

When a user requests access to the data, the request is passed from the mobile device 200 onto the controller processor 104 of the SMC 100. The controller processor then has several options depending on where the data has been stored. The location of the data can be logged by the controller processor 104 in a suitable register or similar when the data was saved.

If the data has been saved in the insecure part of the flash memory 106b, then the data can be accessed directly by the controller processor 104.

If the data has been saved in the secure part of the flash memory 106a, then the controller processor directs the data request to the UICC module 102, which in turn handles the retrieval of the data from the secure memory 106a.

The data stored in the secure memory 106a may be secured by encrypting the data before storing it. The keys used to encrypt the data can differ from that used to encrypt the data transmitted and stored at the remote data store 210. Alternatively, a key derived in a similar manner to Ks can be used. The encryption key used can be further protected by requesting a PIN number be entered by the user before access is given.

Finally, if data is not available on the SMC 100, then the controller processor 104 uses a communication channel established by the mobile device 200 to gain access to the data store 210 to retrieve the data. The data transmitted by the data store 210 is always encrypted to ensure that the data remains secure. The encryption uses the session key Ks previously generated by the SMC 100 and the authentication server 208. The data store 210 is sent the session key Ks by the authentication server (see step 316) which allows the data store to freely encrypt data. As the data store 210 may hold data for numerous SMCs, the request for data made by the SMC 100 must be qualified with the unique identity associated with the SMC 100 as well as the data needed. The data store can then use this information to determine the data to be transmitted back to the mobile device 200 as well as the appropriate session key Ks to use for encryption.

The controller processor 104 may operate according to various policies which can provide for other features. For example, opportunistic synchronisation or data caching can be performed in order to duplicate the data stored locally in the flash memory 106 to the data store 210. Furthermore, these policies may be updated by the authentication server 208 during the registration process or at any other time, as well as by the user. Thus, both the network or service provider (of the authentication server 208) can have control of the policy used by the SMC 100.

It can be seen from the description above that the SMC 100 is able to gain secure access to the remote data store 210 via the mobile device 200 in a manner that is transparent to the user and utilises the GSM mobile communications channel already established by the mobile device 200.

Access to any data stored remotely can also be controlled remotely by the authentication server. For example, the authentication server has already been shown to have links with the data store for transferring the session key Ks to the data store. In another embodiment of the invention, the authentication server may also cancel the session key Ks at any time of instruct the data store to restrict access to the data store therein. For example, this may be desirable to maintain the security of the data store by intermittently requiring that the session key Ks be updated for a given SMC 100, such as after a certain period of time. This makes the data stored therein less open to 3^{rd} party attacks, such as brute force attacks to guess the session key. Furthermore, if the SMC 100 is ever compromised, a user can report the SMC 100 as lost or stolen and access to at least the remotely stored data at the data store 210 can be restricted, leaving only limited data held on the SMC 100 itself exposed. This gives rise to a further feature where the data on the SMC 100 in the flash memory 106 is backed-up intermittently onto the data store 210 as determined by the policy used by the controller processor 104. The data that has been backed-up can itself be deleted to ensure that even if the SMC 100 is lost, no data is compromised as the remote data can be secured at the remote data store 210 by changing the session key or by restricting access altogether.

The access to the data store 210 is provided seamlessly to the user and does not require any intervention from the user. Indeed, from the perspective of both the mobile device 200 and the user, the remote storage appears to be part of the SMC 100.

The following is an example of the virtual storage in use. Let's consider a system where a health professional (such as a general practitioner) needs access to digitally stored health records of his patients. Such records are highly sensitive by their very nature while the mode of operation of the health professional does not guarantee that he will be always within a network coverage area. The professional may be using different devices (such as a PDA, smart phone or laptop) to access data.

The master copy of such health records should be stored in the centralised database, such as data store 210, from where it can be accessed by approved professionals. By appropriately setting policies in his SMC 100, the professional can set up his card in such way that the card will store a copy of such records locally. Further, the card aggressively synchronise data between the central database and the SMC so that the professional has always access to the most current available versions of such records while being able to work off-line if necessary. By moving the card between devices the professional can easily transfer data and authentication means while leaving no copies of sensitive data on any device.

It is noted herein that while the above describes examples of the invention, there are several variations and modifications which may be made to the described examples without departing from the scope of the present invention as defined in the appended claims. One skilled in the art will recognise modifications to the described examples.

## Claims

1. A method of providing data access to a storage means in a telecommunications network from a mobile device, said mobile device comprising a memory card, wherein said method comprises:
establishing by the mobile device a data communications link between the mobile device and the telecommunications network;
generating by the memory card a session key, and independently providing a matching session key to the data store;
accessing by the memory card the storage means using the established data communications link through the mobile device, wherein access is secured by using the session key generated by the memory card.

2. A method according to claim 1, wherein access is secured by using the session key to encrypt and decrypt data transferred between the data store and the memory card.

3. A method according to claim 1 or 2, wherein the session key generated by the memory card is based on a shared secret key held securely in both the memory card and at an authentication server.

4. A method according to claim 3, wherein the session key provided to the data store is generated by the authentication server.

5. A method according to any one of claims 2 to 4, wherein access to the storage means is restricted by changing the session key used by the storage means.

6. A method according to claim 4, wherein the authentication server provides a new session key to the storage means to block access to the storage means from the memory card.

7. A method according to any preceding claim, wherein the memory card comprises a processing means, and said generating and accessing steps are initiated by the processing means.

8. A method according to any preceding claim, wherein the memory card is removable from the mobile device.

9. A method according to any preceding claim, wherein the accessing step comprises storing data input to the mobile device at the memory store.

10. A method according to claim 9, wherein the memory card comprises local storage means and wherein the input data is also stored in the local storage means and the accessing step comprises periodically storing a duplicate of the input data at the memory store in the telecommunications network.

11. A data storage system comprising a storage means in a telecommunications network and a mobile device, said mobile device comprising a memory card, wherein:
the mobile device is adapted to establish a data communications link between the mobile device and the telecommunications network;
the memory card is adapted to generate a session key, and the data store is independently provided with a matching session key, and the memory card is further adapted to access the storage means using the established data communications link through the mobile device, wherein access is secured by using the session key generated by the memory card.

12. A memory card for use in a mobile device, said memory card comprising:
a processor adapted to establish a data communications link between the mobile device and a storage means connected to a telecommunications network;
the memory card is adapted to generate a session key and further adapted to access the storage means through a data communications link established by the mobile device, wherein access is secured by using the session key generated by the memory card.
